# EUROPÄISCHE PATENTSCHRIFT

(11) **EP 2 871 424 B1**
(45) Veröffentlichungstag und Bekanntmachung des Hinweises auf die Patenterteilung: **18.07.2018**
(21) Anmeldenummer: 13192031.6
(22) Anmeldetag: 07.11.2013
(51) Int. Cl.: F24D 3/12, F24D 19/00, F24D 19/10, G05D 23/19

(54) **Regelungsverfahren für ein Heizungs- und/oder Kühlsystem sowie Verteiler-Einrichtung für ein Heizungs- und/oder Kühlsystem**
Method of controlling a heating and/or cooling system and distributor device for a heating and/or cooling system
Procédé de régulation pour un système de chauffage et/ou de refroidissement et dispositif de distribution pour un système de chauffage et/ou de refroidissement

(43) Veröffentlichungstag der Anmeldung: 13.05.2015
(73) Patentinhaber: Grundfos Holding A/S, 8850 Bjerringbro (DK)
(72) Erfinder: Sørensen, Erik Baasch, 8850 Bjerringbro (DK); Clausen, Martin, 8850 Bjerringbro (DK)
(74) Vertreter: Patentanwälte Vollmann & Hemmer

(56) Entgegenhaltungen:
- EP-A1- 1 323 986
- EP-A1- 2 103 890
- EP-A2- 0 729 086
- DE-A1- 3 005 209
- DE-A1- 19 912 588
- DE-A1-102010 022 763

## Beschreibung

Die Erfindung betrifft ein Regelungsverfahren für ein Heizungs- und/oder Kühlsystem mit zumindest einem Lastkreis, durch welchen ein Fluid als Wärmeträger strömt, sowie eine Verteiler-Einrichtung für ein solches Heizungs- und/oder Kühlsystem.

In bekannten Heizungs- und/oder Kühlsystemen wird in der Regel ein Fluid als Wärmeträger verwendet, welches im Falle eines Heizungssystems Wärme von einer Heizquelle in einen zu beheizenden Raum bzw. zu einem zu beheizenden Objekt transportiert. Umgekehrt wird im Falle eines Kühlsystems Wärme von einem zu kühlenden Raum bzw. zu kühlendem Objekt zu einer Kühleinrichtung über das Fluid transportiert. Dazu ist in der Regel zumindest ein Lastkreis vorgesehen, welcher die Wärmequelle bzw. Kühleinrichtung mit dem zu temperierenden Raum oder Objekt verbindet, wobei in dem Raum oder Objekt der Lastkreis einen Wärmetauscher durchläuft. Der Wärmetauscher kann dabei beispielsweise durch Rohrleitungen des Lastkreises im Fußboden, d. h. durch eine Fußbodenheizung, gebildet werden. Zum Fördern des Fluids durch den Lastkreis ist in der Regel eine Umwälzpumpe vorgesehen. Dabei kann die Umwälzpumpe so geregelt sein, dass eine Konstantdruck-Regelung vorgesehen ist, welche einen konstanten Differenzdruck über der Umwälzpumpe gewährleistet. Dieser konstante Differenzdruck wird in der Regel einmal gewählt und eingestellt. Die Einstellung ist jedoch häufig nicht für alle Betriebszustände des Systems optimal.

EP 0 729 086 A2 offenbart ein Verfahren zur Regelung eines Heizsystems, bei welchem die Drehzahl einer das Heizfluid umwälzenden Pumpe in Abhängigkeit vom Fluiddruck zwischen Vorlauf und Rücklauf des Heizkreises geregelt wird.

Aus DE 10 2010 022 763 A1 ist ein Verfahren zum automatischen hydraulischen Abgleich mehrerer Stränge in einer Heizungsanlage bekannt. Für dieses Verfahren sind in den einzelnen Strängen Regelarmaturen und Differenzdruckaufnehmer angeordnet. Zur Volumenstromermittlung in den Strängen ist es bekannt, das Regelventil in dem ungünstigsten Strang vollständig zu öffnen und dann mittels der weiteren Regelventile den Differenzdruck in den anderen Strängen jeweils auf einen gewünschten Wert einzustellen. Nachteilig bei dieser Anordnung ist, dass Differenzdruckaufnehmer für jeden Strang erforderlich sind. Dieses Dokument offenbart den Oberbegriff des Anspruchs 1. Im Hinblick auf diese Problematik ist es Aufgabe der Erfindung ein verbessertes Regelungsverfahren für ein Heizungs- und/oder Kühlsystem bereit zu stellen, welches eine bessere Anpassung des Förderdrucks des Wärmeträgers an verschiedene Betriebszustände ermöglicht. Diese Aufgabe wird gelöst durch ein Regelungsverfahren mit den in Anspruch 1 angegebenen Merkmalen sowie durch eine Verteiler-Einrichtung mit den in Anspruch 8 angegebenen Merkmalen. Bevorzugte Ausführungsformen ergeben sich aus den Unteransprüchen, der nachfolgenden Beschreibung sowie den beigefügten Figuren.

Das erfindungsgemäße Regelungsverfahren ist vorgesehen für ein Heizungs- und/oder Kühlsystem mit zumindest einem Lastkreis, durch welchen ein Fluid, beispielsweise Wasser, als Wärmeträger strömt. Derartige Heizungs- und Kühlsysteme sind insbesondere in Gebäuden bekannt, wobei beispielsweise von einer zentralen Wärmequelle, wie einem Wärmespeicher oder einem Heizkessel, über das Fluid die Wärme in zu beheizende Räume transportiert wird. In den Räumen fließt das Fluid durch geeignete Wärmetauscher, wie Heizkörper oder beispielsweise durch die Leitungen einer Fußbodenheizung. Bei Ausgestaltung als Kühlsystem wird die Wärme aus den zu kühlenden Räumen über das Fluid abtransportiert zu einer Kühleinrichtung oder einem Kältespeicher. Das System kann auch als kombiniertes Heizungs- und Kühlsystem ausgebildet sein, welches beispielsweise im Winter als Heizung und im Sommer als Kühlsystem arbeitet.

Der zumindest eine Lastkreis weist in diesem System ein Regulierventil auf, mittels welchem der Volumenstrom durch diesen Lastkreis einstellbar ist. D. h. das Regulierventil lässt nicht nur zu, den Lastkreis ein- und auszuschalten, d. h. zu öffnen oder zu schließen, sondern ermöglicht es auch, den Durchfluss einzustellen. Dazu kann das Regulierventil insbesondere als elektromotorisch angetriebenes Proportionalventil ausgebildet sein. Ferner weist das Heizungs- und/oder Kühlsystem, für welches das erfindungsgemäße Regelungsverfahren vorgesehen ist, zumindest eine Umwälzpumpe zum Fördern des Fluids durch den Lastkreis auf, welche in der Drehzahl regelbar ist. Dies erfolgt durch Ansteuerung des Antriebsmotors der Umwälzpumpe mittels eines Frequenzumrichters geschehen.

Die Drehzahlregelung erfolgt erfindungsgemäß so, dass ein Differenzdruck über der Umwälzpumpe, d. h. zwischen Ein- und Ausgangsseite der Umwälzpumpe, einem vorgegebenen Druckdifferenz-Sollwert entspricht. D. h. der Differenzdruck wird auf diesen Druckdifferenz-Sollwert geregelt. Der Differenzdruck entspricht gleichzeitig dem Differenzdruck zwischen Ein- und Ausgangsseite des zumindest einen Lastkreises. Erfindungsgemäß ist dabei ferner vorgesehen, dass der Druckdifferenz-Sollwert, auf welchen der Differenzdruck geregelt wird, in Abhängigkeit des Öffnungsgrades des Regulierventils in dem Lastkreis angepasst wird. D. h. es ist kein fester Druckdifferenz-Sollwert für alle Betriebszustände des Heizungs- und/oder Kühlsystems vorgesehen, vielmehr kann der Druckdifferenz-Sollwert an verschiedene Betriebszustände, welche aus verschiedenen Öffnungsgraden des Regulierventiles angepasst werden, indem der Druckdifferenz-Sollwert angepasst, d. h. entsprechend erhöht oder verringert wird. So wird der Druck des dem Lastkreis zugeführten Fluids an den Öffnungsgrad des Regulierventiles angepasst. Dies ermöglicht es insbesondere den Differenzdruck zu reduzieren, um elektrische Antriebsenergie für die Umwälzpumpe zu sparen und so insgesamt eine bessere Energieeffizienz zu erreichen. Darüber hinaus können unerwünschte Strömungsgeräusche durch zu hohen Differenzdruck vermieden werden. Die Regelung erfolgt über eine zentrale Steuereinrichtung, welche den Öffnungsgrad des Regulierventiles erfasst oder vorgibt und gleichzeitig den Druckdifferenz-Sollwert für die Differenzdruckregelung der Umwälzpumpe vorgibt bzw. einstellt. Besonders bevorzugt kann die zentrale Steuereinrichtung auch die Differenzdruckregelung der Umwälzpumpe selber übernehmen.

Für den Fall, dass in dem Heizungs- und Kühlsystem mehrere Lastkreise vorgesehen sind, was bevorzugt der Fall ist, sind entsprechend mehrere Regulierventile vorgesehen. Für jeden Lastkreis ist vorzugsweise ein Regulierventil zur Anpassung des Durchflusses bzw. Volumenstromes durch den jeweiligen Lastkreis vorhanden. Für den Fall, dass mehrere Lastkreise vorhanden sind, ist es bevorzugt für die Einstellung des Differenzdruck-Sollwertes lediglich den Öffnungsgrad eines Regulierventiles zugrunde zu legen. Erfindungsgemäss wird zur Anpassung des Druckdifferenz-Sollwertes für den Differenzdruck über der Umwälzpumpe dabei dasjenige Regulierventil zugrunde gelegt, welches am weitesten geöffnet ist, d. h. momentan den höchsten Öffnungsgrad aufweist. Dazu werden beispielsweise von einer zentralen Steuereinrichtung die Öffnungsgrade sämtlicher Regulierventile erfasst und miteinander verglichen, sodass bei der Einstellung des Druckdifferenz-Sollwertes dann der Öffnungsgrad des am weitesten geöffneten Regulierventils zugrunde gelegt werden kann. Der Öffnungsgrad dieses Regulierventils wird mit einem Soll-Öffnungsgrad verglichen und bei Überschreiten des Soll-Öffnungsgrades wird der Druckdifferenz-Sollwert für den Differenzdruck erhöht, während bei Unterschreiten des Soll-Öffnungsgrades der Druckdifferenz-Sollwert für den Differenzdruck reduziert wird. Somit wird der Druckdifferenz-Sollwert an den Lastkreis angepasst, der den größten Wärme- oder Kältebedarf aufweist. Auf diese Weise wird sichergestellt, dass für diesen Lastkreis ausreichend Wärme oder Kälte zur Verfügung steht. Gleichzeitig kann jedoch der Differenzdruck über der Pumpe und damit die Leistung der Pumpe soweit wie möglich reduziert werden, um den Energiebedarf zu optimieren. Wenn lediglich ein Lastkreis mit einem Regulierventil vorhanden ist, erfolgt die entsprechende Einstellung des Druckdifferenz-Sollwertes auf Grundlage des Öffnungsgrades dieses einen Regulierventils. Es ist zu verstehen, dass es sich bei dem Soll-Öffnungsgrad um einen festen Wert oder auch um einen Bereich mit einem unteren und einem oberen Grenzwert handeln kann. In letzterem Fall wird der Druckdifferenz-Sollwert dann bei Überschreiten des oberen Öffnungsgrad erhöht und bei Unterschreiten des unteren Grenzwertes reduziert. Der Soll-Öffnungsgrad bzw. der zugehörige Bereich ist bevorzugt ein fest vorgegebener Wert bzw. Bereich, beispielsweise ein Öffnungsgrad von 80 %. Die Erhöhung und Verringerung des Druckdifferenz-Sollwertes bei Überschreiten bzw. Unterschreiten des Soll-Öffnungsgrades kann in fest vorgegebenen Schritten oder aber proportional zur Änderung des Öffnungsgrades erfolgen.

Gemäß einer bevorzugten Ausführungsform der Erfindung findet zusätzlich eine Regelung des Volumenstromes durch den oder die Lastkreise statt. Dazu ist es bevorzugt, dass eine Eingangstemperatur des Fluids an einem Eingang des zumindest einen Lastkreises und eine Austrittstemperatur des Fluids an einem Ausgang des zumindest einen Lastkreises erfasst wird, eine Temperaturdifferenz zwischen der Eingangstemperatur und der Ausgangstemperatur bestimmt wird und anschließend ein Durchfluss bzw. Volumenstrom des Fluids durch diesen Lastkreis in Abhängigkeit dieser Temperaturdifferenz über das Regulierventil in diesem Lastkreis eingestellt wird. Die Eingangs- und die Austrittstemperatur können über entsprechende Temperatursensoren erfasst werden. Für den Fall, dass mehrere parallel angeordnete Lastkreise vorgesehen sind, kann dabei die Eingangstemperatur zentral stromaufwärts sämtlicher Lastkreise erfasst werden, wobei die Austrittstemperaturen individuell am Austritt jedes einzelnen Lastkreises erfasst werden, da die Austrittstemperaturen unterschiedlich sind und die Volumenströme durch die einzelnen Lastkreise individuell an die jeweilige Austrittstemperatur bzw. die Temperaturdifferenz zwischen Eintritts- und Austrittstemperatur des jeweiligen Lastkreises angepasst werden sollen. Die Anpassung des Volumenstromes an die Temperaturdifferenz für jeden einzelnen Lastkreis bewirkt, dass der Volumenstrom im Wesentlichen an den tatsächlichen Energiebedarf des Lastkreises bzw. des von dem Lastkreis zu temperierenden Raumes angepasst werden kann. Auf diese Weise kann gegenüber bekannten Systemen mit fest vorgegebenem Volumenstrom zum einen in vielen Betriebsbereichen eine Energieeinsparung erreicht werden und zum anderen ein Komfortgewinn bei der Temperierung erzielt werden.

Die Regelung des Volumenstroms erfolgt bevorzugt in einer dazu geeigneten Steuereinrichtung, welche mit dem Regulierventil des zumindest einen Lastkreises sowie den erforderlichen Temperatursensoren verbunden ist. Bevorzugt ist eine zentrale Steuereinrichtung für mehrere Lastkreise vorgesehen, welche den Volumenstrom der mehreren Lastkreise steuert bzw. regelt.

Zur Regelung des Volumenstroms in dem zumindest einen Lastkreis wird vorzugsweise die für den Lastkreis ermittelte Temperaturdifferenz mit einem Temperaturdifferenz-Sollwert verglichen und bei einer Abweichung der Temperaturdifferenz von dem Temperaturdifferenz-Sollwert wird der Volumenstrom erhöht. Der Temperaturdifferenz-Sollwert ist bevorzugt ein für die Anlage oder einen einzelnen Lastkreis fest eingestellter bzw. vorgegebener Wert. Wenn die Temperaturdifferenz zu groß wird, ist dies ein Zeichen dafür, dass dem zu temperierenden Raum nicht genug Wärme oder Kälte zugeführt wird, sodass es zweckmäßig ist, den Volumenstrom zu erhöhen. Wenn die Temperaturdifferenz zu gering ist, spricht dies dafür, dass zu viel Wärme bzw. Kälte zugeführt wird, sodass der Volumenstrom reduziert werden kann. Bei der Betrachtung der Temperaturdifferenz kann lediglich der Betrag der Temperaturdifferenz betrachtet werden, sodass dasselbe Verfahren für ein Kühlsystem wie auch für ein Heizsystem Verwendung finden kann. In einem Heizsystem wird stets die Eingangstemperatur höher als die Austrittstemperatur sein. In einem Kühlsystem ist dies genau umgekehrt.

Ferner ist es bevorzugt, dass ein Ein- und Ausschalten der jeweiligen Lastkreise in Abhängigkeit der Raumtemperatur des durch den jeweiligen Lastkreis zu temperierenden Raumes erfolgt. Dazu wird vorzugsweise in einem von dem Lastkreis zu temperierenden Raum eine Raumtemperatur erfasst und, wenn die Raumtemperatur einen Temperatur-Sollwert erreicht, wird der Lastkreis durch Unterbrechung des Volumenstromes ausgeschaltet. Die Unterbrechung des Volumenstromes kann durch ein geeignetes Ventil geschehen, wobei vorzugsweise dies von dem oben beschriebenen Regulierventil übernommen wird, welches zu diesem Zweck vollständig geschlossen wird. D. h. das Regulierventil ist vorzugsweise so ausgebildet, dass es nicht nur eine Veränderung des Öffnungsgrades in einem bestimmten Bereich zulässt, sondern zum Abschalten des Lastkreises vollständig geschlossen werden kann. Das Einschalten des Lastkreises kann dann entsprechend durch Öffnen des Regulierventiles erfolgen, wobei mit Einschalten des Lastkreises weiter bevorzugt die oben beschriebene Volumenstromregelung für den Lastkreis einsetzt. Es ist zu verstehen, dass es sich bei dem Temperatur-Sollwert um einen fest vorgegebenen Wert oder aber einen Sollbereich handeln kann, wobei das Ein- und Ausschalten dann bei Überschreiten der oberen Grenze bzw. Unterschreiten der unteren Grenze erfolgt. In einem Heizsystem wird der Lastkreis eingeschaltet, wenn die erfasste Raumtemperatur unterhalb des Temperatur-Sollwertes liegt. In einem Kühlsystem wird der Lastkreis eingeschaltet, wenn die Raumtemperatur über dem Temperatur-Sollwert liegt. Bevorzugt ist der Temperatur-Sollwert einstellbar, sodass beispielsweise der Nutzer die gewünschte Raumtemperatur vorgeben kann. Hierzu kann ein Raumthermostat vorgesehen sein, an welchem die Raumtemperatur erfasst wird und an welchem die gewünschte Raumtemperatur einstellbar ist.

Weiter bevorzugt findet erfindungsgemäß auch eine Anpassung der Vorlauftemperatur des dem zumindest einen Lastkreis zugeführten Fluids statt. Die Vorlauftemperatur wird dabei bevorzugt in Abhängigkeit der Einschaltdauer des zumindest einen Lastkreises eingestellt. Die Vorlauftemperatur wird in Abhängigkeit der Einschaltdauer des zumindest einen Lastkreises erhöht oder gesenkt. Die Einschaltdauer ist dabei die relative Einschaltdauer, d. h. das Verhältnis der Einschaltzeit zu der Zykluszeit zwischen einem ersten und einem nachfolgenden zweiten Einschalten des Lastkreises. Die relative Einschaltdauer bildet dabei einen Lastzyklus (load-cycle) bzw. ein Lastverhältnis. Vorzugsweise wird bei einem Heizsystem die Vorlauftemperatur erhöht, wenn die Einschaltdauer einen vorbestimmten Grenzwert übersteigt. Umgekehrt wird vorzugsweise die Vorlauftemperatur verringert, wenn die Einschaltdauer einen vorgegebenen Grenzwert unterschreitet. Bei einem Kühlsystem wird umgekehrt die Vorlauftemperatur bei Überschreiten eines Grenzwertes für die Einschaltdauer reduziert und bei Unterschreiten erhöht. Dabei kann ein einziger fester Grenzwert oder auch ein Bereich mit einer oberen und unteren Grenze vorgesehen sein, wobei eine Erhöhung der Vorlauftemperatur bei Überschreiten der oberen Grenze und eine Verringerung der Vorlauftemperatur bei Unterschreiten der unteren Grenze stattfindet. Die Vorlauftemperatur kann dabei in festen Schritten verändert werden, vorzugsweise jedoch findet eine Veränderung der Vorlauftemperatur proportional zur Änderung der Einschaltdauer statt. D. h. bei einer großen Änderung der Einschaltdauer erfolgt auch eine größere Änderung der Vorlauftemperatur.

Anstelle der relativen Einschaltdauer könnte entsprechend auch die relative Ausschaltdauer, d. h. die Ausschaltzeit bezogen auf die Zykluszeit, d. h. die Zeitspanne zwischen einem Einschalten des Lastkreises und einem nachfolgenden zweiten Einschalten des Lastkreises, zur Einstellung der Vorlauftemperatur berücksichtigt werden. So könnte beispielsweise die Vorlauftemperatur erhöht werden, wenn die relative Ausschaltdauer einen vorbestimmten Grenzwert unterschreitet. Umgekehrt würde die Vorlauftemperatur dann verringert, wenn die relative Ausschaltdauer einen vorgegebenen Grenzwert überschreitet.

Für den Fall, dass mehrere Lastkreise vorhanden sind, wird vorzugsweise zur Einstellung der Vorlauftemperatur eines allen Lastkreisen gemeinsam zugeführten Fluids die relative Einschaltdauer desjenigen Lastkreises betrachtet, welcher die längsten Einschaltdauern aufweist. Dies ist der Lastkreis, welcher den höchsten Wärme- oder Kältebedarf aufweist. Zur Einstellung bzw. Anpassung der Vorlauftemperatur ist vorzugsweise eine entsprechende Steuereinrichtung vorhanden, welche die Einschaltdauern der verschiedenen Regulierventile erfasst und auf Grundlage der Einschaltdauer desjenigen Lastkreises, welcher die längste Einschaltdauer aufweist, die Vorlauftemperatur entsprechend einstellt. Diese Steuereinrichtung kann eine zentrale Steuereinrichtung sein, welche auch die vorangehend beschriebenen Steuer- bzw. Regelfunktionen mit ausführt.

Die verschiedenen vorangehend beschriebenen Regel- bzw. Steuerverfahren, d. h. die Differenzdruckregelung über der Umwälzpumpe, die Anpassung des Druckdifferenz-Sollwertes, die Volumenstromregelung für die Lastkreise, die Anpassung der Vorlauftemperatur, die Vorlauftemperatur- und die Raumtemperaturregelung erfolgen bevorzugt kontinuierlich und gleichzeitig. Dabei sind die verschiedenen Regelkreise bevorzugt unterschiedlich träge bzw. unterschiedlich schnell ausgestaltet, sodass sie sich gegenseitig nicht beeinflussen. Der schnellste Regelkreis ist vorzugsweise derjenige Regelkreis, welcher den Differenzdruck über der Pumpe regelt. Der nächst langsamere Regelkreis ist vorzugsweise derjenige Regelkreis, welcher die Vorlauftemperatur regelt, d. h. beispielsweise eine Mischeinrichtung zur Einstellung der Vorlauftemperatur auf den Vorlauftemperatur-Sollwert regelt. Der nächst langsamere Regelkreis ist bevorzugt derjenige Regelkreis, welcher den Volumenstrom für den einzelnen Lastkreis regelt. Noch langsamer ist der Regelkreis, welcher den Druckdifferenz-Sollwert für die Differenzdruckregelung einstellt. Diese Regelung erfolgt vorzugsweise so langsam, dass sie nicht mit der Volumenstromregelung der einzelnen Lastkreise in Wechselwirkung tritt. Noch langsamer ist weiter bevorzugt der Regelkreis ausgebildet, welcher die Raumtemperatur regelt, d. h. die Lastkreise abhängig von der Raumtemperatur ein- und ausschaltet. Der langsamste Regelkreis ist vorzugsweise der Regelkreis, welcher den Vorlauftemperatur-Sollwert einstellt, d. h. die beschriebene Anpassung der Vorlauftemperatur vornimmt.

Gegenstand der Erfindung ist neben dem vorangehend beschriebenen Regelungsverfahren auch eine Verteiler-Einrichtung für ein Heizungs- und/oder Kühlsystem. Die erfindungsgemäße Verteiler-Einrichtung weist zumindest eine in ihrer Drehzahl einstellbare bzw. regelbare Umwälzpumpe zum Fördern eines Fluids durch zumindest einen, vorzugsweise mehrere parallel angeordnete Lastkreise auf. Ferner ist zumindest ein Regulierventil zum Einstellen des Volumenstromes durch den zumindest einen Lastkreis vorhanden. Für den Fall, dass mehrere Lastkreise vorhanden sind, sind entsprechend mehrere Regulierventile, nämlich zumindest ein Regulierventil für jeden Lastkreis vorhanden, um den Volumenstrom durch die einzelnen Lastkreise jeweils individuell einstellen zu können. Ferner ist eine Steuereinrichtung vorgesehen, welche mit der Umwälzpumpe und einer Druckerfassungseinrichtung zum Ermitteln des Differenzdruckes über der Pumpe verbunden ist. Die Druckerfassungseinrichtung kann dabei von Drucksensoren gebildet werden. Alternativ kann die Druckerfassungsvorrichtung auch eine Einrichtung sein, welche den Differenzdruck, gegebenenfalls näherungsweise, aus anderen Größen, insbesondere Betriebsparametern der Umwälzpumpe ableitet. So kann der Differenzdruck aus der Drehzahl und der aufgenommenen elektrischen Leistung des Antriebsmotors der Umwälzpumpe bestimmt werden.

Die Steuereinrichtung ist so ausgestaltet, dass sie ein Regelungsverfahren gemäß der vorangehenden Beschreibung, insbesondere zur Einstellung der Drehzahl der Umwälzpumpe zum Erreichen eines Druckdifferenz-Sollwertes ausführt. D. h. die Steuereinrichtung regelt die Drehzahl der Umwälzpumpe, wobei sie den Druckdifferenz-Sollwert verändern bzw. anpassen kann. Dazu ist die Steuereinrichtung so ausgebildet, dass sie den Druckdifferenz-Sollwert, wie oben beschrieben, in Abhängigkeit des Öffnungsgrades eines Regulierventils zumindest eines Lastkreises anpasst. Dazu ist die Steuereinrichtung entsprechend mit dem Regulierventil bzw. gegebenenfalls mehreren Regulierventilen signalverbunden, um deren Öffnungsgrad erfassen zu können.

Bevorzugt ist die Steuereinrichtung in die Umwälzpumpe integriert und insbesondere in einem Elektronikgehäuse der Umwälzpumpe angeordnet. So kann bevorzugt eine zentrale Steuereinrichtung, welche die gesamte Steuerung der Verteiler-Einrichtung und insbesondere die Differenzdruckregelung der Umwälzpumpe und die Einstellung des Druckdifferenz-Sollwertes vornimmt, in die Umwälzpumpe bzw. das Umwälzpumpenaggregat integriert werden. Dadurch wird der Aufbau und die Montage erheblich vereinfacht.

Gemäß einer weiteren bevorzugten Ausführungsform sind mehrere Regulierventile vorgesehen, welche jeweils zum Einstellen eines Volumenstromes in einem von mehreren Lastkreisen vorgesehen sind, wobei die Steuereinrichtung zur Ansteuerung der mehreren Regulierventile ausgebildet und mit den Regulierventilen zu deren Ansteuerung signalverbunden ist. D. h. die Steuereinrichtung ist in diesem Fall vorzugsweise so ausgebildet, dass sie die oben beschriebene Volumenstromregelung für die einzelnen Lastkreise in Abhängigkeit der erfassten Temperaturdifferenzen zwischen Ein- und Ausgang der Lastkreise ausführt. Dabei ist es bevorzugt, dass eine zentrale Steuereinrichtung die Regelung mehrerer, vorzugsweise aller Lastkreise übernimmt. Dies hat den Vorteil, dass die Steuereinrichtung so den Öffnungsgrad der einzelnen Regulierventile erfasst bzw. vorgibt und der beschriebenen Einstellung des Druckdifferenz-Sollwertes zugrunde legen kann. Bevorzugt ist auch der Teil der Steuereinrichtung, welcher die Volumenstromregelung für die einzelnen Lastkreise durch Einstellung der Regulierventile vornimmt, mit in die Umwälzpumpe integriert, d. h. die erforderlichen elektronischen Komponenten sind vorzugsweise in einem Elektronikgehäuse an der Umwälzpumpe angeordnet. Die verschiedenen beschriebenen Steuer- bzw. Regelverfahren können als Softwaremodule in einer gemeinsamen Hardware realisiert sein oder auch von verschiedenen Hardwarekomponenten, welche in geeigneter Weise miteinander kommunizieren, ausgeführt werden.

Bevorzugt sind für den Fall, dass mehrere Regulierventile vorgesehen sind, diese mehreren Regulierventile in einer gemeinsamen Verteilerbaugruppe, d. h. in räumlicher Nähe zueinander angeordnet. Auf diese Weise wird die Installation vereinfacht, da die gesamte Verteilerbaugruppe als vorgefertigte Baueinheit bereitgestellt werden kann. Ferner können so elektrische Verbindungen zwischen den Regulierventilen und der beschriebenen Steuereinrichtung und gegebenenfalls erforderlichen Sensoren kurz gehalten werden.

Auch die beschriebene Steuereinrichtung ist bevorzugt ebenfalls in der gemeinsamen Verteilbaugruppe angeordnet. Dabei ist die Steuereinrichtung, wie beschrieben, bevorzugt in die Umwälzpumpe integriert bzw. in dieser, d. h. deren Elektronikgehäuse angeordnet. Die oben beschriebenen Raumtemperaturfühler bzw. Raumtemperaturthermostaten sind ebenfalls bevorzugt mit der beschriebenen Steuereinrichtung, insbesondere der in die Umwälzpumpe bzw. das Umwälzpumpenaggregat integrierten Steuereinrichtung signalverbunden. Dies kann über elektrische Leitungen oder auch über Funkverbindung erfolgen. Bevorzugt stellen diese Raumtemperaturfühler die einzigen externen Komponenten, welche mit der Steuereinrichtung kommunizieren müssen, dar. Alle anderen Komponenten, wie die Umwälzpumpe, die Regulierventile, sowie erforderliche Temperatursensoren und gegebenenfalls Drucksensoren sind bevorzugt in die Verteiler-Einrichtung integriert. Die Verteiler-Einrichtung weist zweckmäßigerweise Anschlüsse für den Zulauf und Rücklauf für die Fluidversorgung, d. h. einen Versorgungskreis und einzelne Anschlüsse für die verschiedenen Lastkreise auf.

Besonders bevorzugt ist die beschriebene Druckerfassungseinrichtung in die Umwälzpumpe integriert und in der beschriebenen Weise ausgestaltet, den Differenzdruck über der Umwälzpumpe auf Grundlage von Betriebsparametern der Umwälzpumpe zu ermitteln.

Nachfolgend wird die Erfindung beispielhaft anhand der beigefügten Figuren beschrieben. In diesen zeigt:
- Fig. 1: schematisch ein Heizungs- oder Kühlsystem, in dem das erfindungsgemäße Regelungsverfahren sowie eine erfindungsgemäße Verteiler-Einrichtung zum Einsatz kommen,
- Fig. 2: in einer schematischen perspektivischen Ansicht einer Verteiler-Einrichtung gemäß der Erfindung,
- Fig. 3: eine Draufsicht auf die Verteilereinrichtung gemäß Fig. 2,
- Fig. 4: die Einschaltdauern eines Lastkreises und
- Fig. 5: schematisch das Zusammenwirken einzelner Teile eines erfindungsgemäßen Regelungsverfahrens.

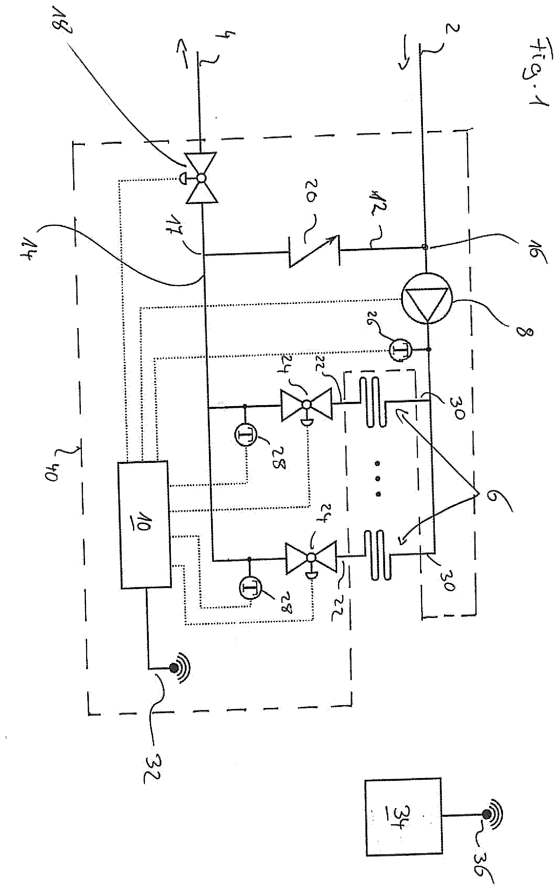

Fig. 1 zeigt ein Heizungs- bzw. Kühlsystem, welches beispielsweise als ein Fußbodenheizungssystem ausgebildet sein kann. Nachfolgend wird die Erfindung am Beispiel eines Heizungssystems beschrieben. Es ist jedoch zu verstehen, dass die Erfindung auch in entsprechender Weise als Kühlsystem verwirklicht werden könnte. Alternativ kann das System auch sowohl zur Heizung als auch zur Kühlung, d. h. beispielsweise im Winter zur Heizung und im Sommer zur Kühlung genutzt werden.

Das in Fig. 1 gezeigte Heizungssystem weist einen Einlass 2 und einen Auslass 4 auf, welche zur Verbindung mit einer Versorgung, d. h. beispielsweise einem Heizkessel, einem Wärmespeicher, einer Kühlanlage etc. vorgesehen sind. Darüber hinaus sind mehrere Lastkreise 6 vorgesehen, welche beispielsweise einzelne Fußbodenheizungskreise darstellen, welche jeweils einen Teilbereich wie z. B. einen Raum eines Gebäudes beheizen. Eingangsseitig, d. h. stromaufwärts der Lastkreise 6 ist eine Umwälzpumpe bzw. ein Umwälzpumpenaggregat 8 angeordnet. Dieses weist einen drehzahlgeregelten Antriebsmotor auf und ist mit einer Steuereinrichtung 10 zur Ansteuerung und insbesondere Drehzahleinstellung verbunden. Die Eingangsseite des Umwälzpumpenaggregates 8 ist mit dem Einlass 2 verbunden.

Stromaufwärts des Umwälzpumpenaggregates 8 ist darüber hinaus eine Mischeinrichtung angeordnet. Die Mischeinrichtung weist eine Mischleitung 12 auf, welche einen Rücklauf 14 von den Lastkreisen 6 mit einem Mischpunkt 16 in dem Strömungsweg von dem Einlass 2 zu der Umwälzpumpe 8 verbindet. D. h. an dem Mischpunkt 16 wird Fluid aus dem Einlass 2 mit Fluid aus dem Rücklauf 14 gemischt, um die Vorlauftemperatur einstellen zu können. Zur Regelung des Mischungsverhältnisses ist in dem Rücklauf 14 stromabwärts des Abzweiges 17 der Mischleitung 12 in dem Rücklauf 14 ein Regulierventil angeordnet, welches ein Mischventil 18 bildet. Dies ist ebenfalls mit der Steuereinrichtung 10 zu seiner Ansteuerung signalverbunden. In der Mischleitung 12 ist darüber hinaus ein Rückschlagventil 20 angeordnet, welches einen Rückfluss von Fluid von dem Mischpunkt 16 in den Rücklauf 14 verhindert. Je nach Öffnungsgrad des Mischventils 18 verändert sich der Volumenstrom, welcher aus dem Rücklauf 14 zu dem Auslass 4 strömt. Wird der Volumenstrom durch Verkleinerung des Öffnungsgrades des Mischventils 18 verkleinert, strömt ein größerer Anteil des Fluids durch die Mischleitung 12 zu dem Mischpunkt 16. Wird der Öffnungsgrad des Mischventils 18 vergrößert, erhöht sich der Volumenstrom durch den Auslass 4 und es strömt entsprechend ein geringerer Teil der Fluidströmung aus dem Rücklauf 14 durch Mischleitung 12 zu dem Mischpunkt 16. So verändert sich der Anteil von Fluid aus dem Rücklauf 14, welcher an dem Mischpunkt 16 dem Fluid aus dem Einlass 2 zugemischt wird. Durch die Mischung des, im Falle eines Heizungssystems, kälteren Fluids aus dem Rücklauf 14 mit dem wärmeren Fluid aus dem Einlass 2, kann die Vorlauftemperatur des Fluids aus dem Einlass 2 gesenkt werden. Im Falle eines Kühlsystems wird umgekehrt wärmeres Fluid aus dem Rücklauf 14 dem kälteren Fluid aus dem Einlass 2 zugemischt, um die Vorlauftemperatur zu erhöhen. Die Umwälzpumpe 8 fördert das Fluid von dem Mischpunkt 16 zu den parallel angeordneten Lastkreisen 6.

An den Ausgängen 22 der Lastkreise, d. h. in deren Rückläufen, ist jeweils ein Regulierventil 24 angeordnet, welches als elektromotorisch angetriebene Regulierventil 24 ausgebildet ist und von der Steuereinrichtung 10 angesteuert wird. Die Regulierventile 24 können in ihrem Öffnungsgrad variiert und auch vollständig geschlossen werden, um den Durchfluss bzw. Volumenstrom durch jeden einzelnen Lastkreis 6 einzustellen. Dabei können die Regulierventile 24 von der Steuereinrichtung 10 individuell angesteuert werden, sodass eine Anpassung des Durchflusses durch jeden einzelnen Lastkreis 6 unabhängig von den übrigen Lastkreisen möglich ist.

In dem gezeigten System sind darüber hinaus Temperatursensoren vorgesehen. Ein erster Temperatursensor ist ein Vorlauftemperatursensor 26 und erfasst die Vorlauftemperatur des Fluids, welches den Lastkreisen 6 zugeführt wird. Darüber hinaus sind an den Ausgängen 22 der Lastkreise 6 Temperatursensoren 28 angeordnet, welche die Austrittstemperaturen des Fluids aus den einzelnen Lastkreisen 6 erfassen. Die von dem Vorlauftemperatursensor 26 und dem Temperatursensoren 28 erfassten Temperaturwerte werden über entsprechende Kommunikationsverbindungen ebenfalls der Steuereinrichtung 10 zugeführt.

Das Umwälzpumpenaggregat 8 ist darüber hinaus ausgebildet, einen Differenzdruck Hₚᵤ zwischen der Eingangsseite und der Ausgangsseite des Umwälzpumpenaggregates 8 zu ermitteln, welcher gleichzeitig dem Differenzdruck zwischen den Eingängen 30 und den Mischpunkt 16, d. h. dem Druckverlust über jeden der durch die Lastkreise 6 definierten Zweige zwischen diesen Punkten entspricht. Ferner ist das Umwälzpumpenaggregat 8 ausgebildet, den Durchfluss durch das Umwälzpumpenaggregat 8 zu bestimmen. Diese vom Umwälzpumpenaggregat 8 erfassten Werte werden über eine Signalverbindung ebenfalls der zentralen Steuereinrichtung 10 zugeführt. Alternativ könnten auch entsprechende Druck- und Durchflusssensoren zusätzlich zu dem Umwälzpumpenaggregat 8 angeordnet werden, um die Druckdifferenz zwischen Ein- und Ausgang der Lastkreise 6 sowie den Durchfluss durch alle Lastkreise 6 zu bestimmen.

Auf Grundlage des Differenzdruckes Hₚᵤ, d. h. dem Druckverlust über den Lastkreisen lässt sich in Kenntnis der Charakteristik der im Strömungsweg liegenden Ventile, insbesondere des Rückschlagventiles 20 und des Regulierventiles 24, darüber hinaus der Volumenstrom durch jeden Lastkreis 6 in Abhängigkeit des Öffnungsgrades des jeweiligen Regulierventiles 24 bestimmen. Da die Steuereinrichtung 10 den Öffnungsgrad der Regulierventile 24 steuert, kann die Steuereinrichtung 10 aus den genannten Werten den Durchfluss bzw. Volumenstrom durch den zugehörigen Lastkreis 6 bestimmen.

So kann, wie unten beschrieben, ein gewünschter Volumenstrom durch den Lastkreis 6 eingestellt werden.

Die Steuereinrichtung 10 ist darüber hinaus mit einer Kommunikationsschnittstelle 32 versehen, welche ausgebildet ist, mit einem oder mehreren Raumthermostaten 34 bzw. Raumtemperaturfühlern 34 zu kommunizieren. Vorzugsweise ist in jedem Raum, welcher von einem Lastkreis 6 temperiert wird, ein solcher Raumthermostat 34 vorgesehen. Im gezeigten Beispiel ist die Kommunikationsschnittstelle 32 als Funkschnittstelle ausgebildet, welche mit einer korrespondieren Funkschnittstelle 36 des Raumthermostates 34 kommuniziert. Alternativ könnte eine Leitungsverbindung über eine separate Signalleitung, ein Bussystem oder eine Powerline-Kommunikation vorgesehen sein. Die Raumthermostate 34 erfassen die Raumtemperaturen in den zu temperierenden Räumen. Darüber hinaus kann über die Raumthermostate 34 in bekannter Weise vom Nutzer jeweils eine Solltemperatur für den zu temperierenden Raum vorgegeben werden.

Die Steuereinrichtung 10 ist zur Anwendung verschiedener Regelungsverfahren ausgebildet. So bewirkt gemäß einem ersten Regelungsverfahren die Steuereinrichtung 10 eine Volumenstromregelung für die einzelnen Lastkreise 6. Dazu wird die Temperaturdifferenz ΔT zwischen dem Eingang 30 und dem Ausgang 22 jedes Lastkreises 6 erfasst. Dies erfolgt über den Vorlauftemperatursensor 26 sowie dem zu dem jeweiligen Lastkreis 6 zugehörigen Temperatursensor 28. In Abhängigkeit dieser Temperaturdifferenz ΔT wird über das Regulierventil 24 dieses Lastkreises 6 der Volumenstrom von der Steuereinrichtung 10 durch Veränderung des Öffnungsgrades V_{pos,n} des Regulierventiles 24 geregelt, bzw. eingestellt, sodass die Temperaturdifferenz ΔT einem vorgegebenen, in der Steuereinrichtung 10 gespeicherten, Sollwert entspricht, d. h., dass ΔT konstant gehalten wird. Dies erfolgt unabhängig für jeden Lastkreis 6, sodass alle Lastkreise durch die Volumenstromregelung an dem tatsächlichen Energiebedarf angepasst werden können. Der Sollwert kann für alle Lastkreise 6 gleich sein oder es können unterschiedliche Sollwerte für einzelne Lastkreise vorgegeben werden. Die Sollwerte sind in der Steuereinrichtung 10 gespeichert.

Dabei wird das Umwälzpumpenaggregat 8 von der Steuereinrichtung 10 so geregelt, dass es einen vorgegebenen Druckdifferenz-Sollwert zwischen Ein- und Ausgang des Umwälzpumpenaggregates einhält. Dieser Differenzdruck wird somit auf einen Druckdifferenz-Sollwert geregelt, welcher ebenfalls von der Steuereinrichtung 10 eingestellt oder vorgegeben wird. Der Druckdiffernez-Sollwert H_{ref} wird von der Steuereinrichtung 10 in Abhängigkeit des Öffnungsgrades der Regulierventile 24 eingestellt. Dazu werden von der Steuereinrichtung 10 sämtliche Öffnungsgrade aller Regulierventile 24 betrachtet. Dasjenige Regulierventil, welches aktuell am weitesten geöffnet ist, d. h. den größten Öffnungsgrad aufweist, wird dann von der Steuereinrichtung 10 der Einstellung des Druckdifferenz-Sollwertes zugrundegelegt. So wird der Öffnungsgrad des Regulierventils, welches am weitesten geöffnet ist, mit einem Soll-Öffnungsgrad V_{pos,ref} verglichen. Wenn der aktuelle Öffnungsgrad V_{pos,n} des Regulierventils 24 mit dem größten Öffnungsgrad den Soll-Öffnungsgrad V_{pos,ref} übersteigt, wird der Druckdifferenz-Sollwert H_{ref} erhöht. Wird der Soll-Öffnungsgrad V_{pos,ref} vom tatsächlichen Öffnungsgrad V_{pos,n} unterschritten, wird der Druckdifferenz-Sollwert H_{ref} entsprechend erniedrigt. Die Erhöhung bzw. Erniedrigung erfolgt bevorzugt proportional zur Abweichung von dem Soll-Öffnungsgrad V_{pos,ref}.

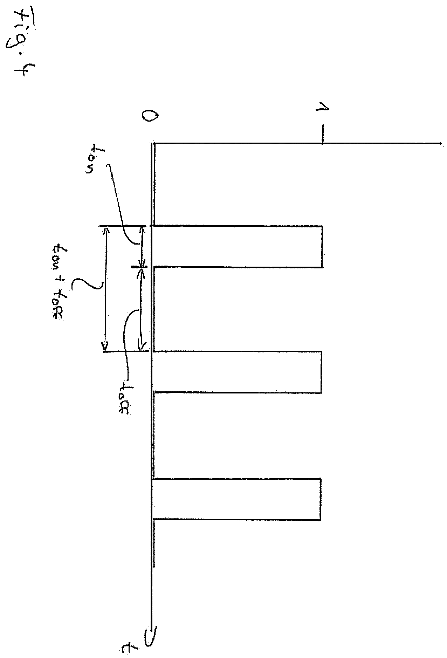

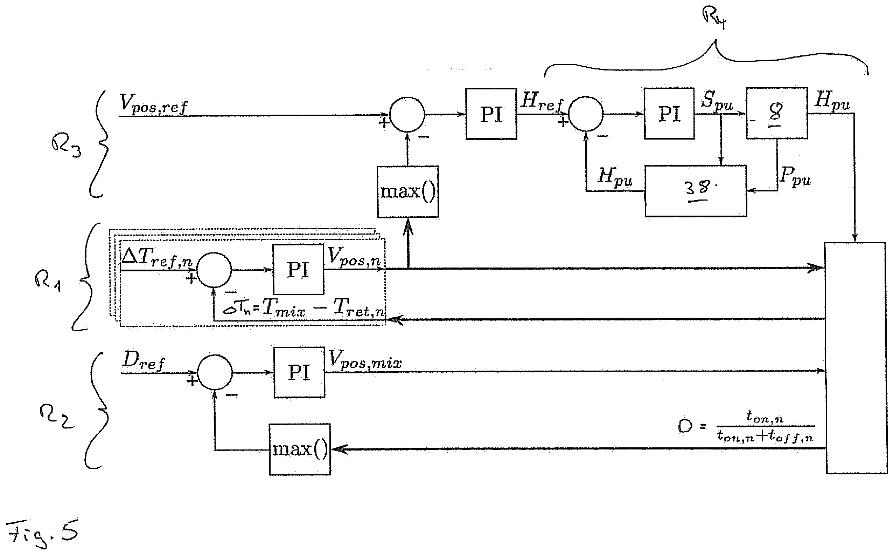

Ein weiterer Regelungskreis bzw. ein weiteres Regelungsverfahren, welches von der Steuereinrichtung 10 durchgeführt wird, betrifft die Regelung der Vorlauftemperatur Tₘᵢₓ am Eingang 30 der Lastkreise 6, welche von dem Vorlauftemperatursensor 26 erfasst wird. Die Vorlauftemperatur Tₘᵢₓ kann von der Steuereinrichtung 10 durch Ansteuerung des Mischventils 18 verändert bzw. eingestellt werden. Dazu bildet die Steuereinrichtung 10 eine Vorlauftemperatur-Einstelleinrichtung, welche die Vorlauftemperatur Tₘᵢₓ, d. h. deren Sollwert, in Abhängigkeit der Einschaltdauer, d. h. der relativen Einschaltdauer D der Lastkreise 6 einstellt. Die Bedeutung der relativen Einschaltdauer D wird anhand von Fig. 4 näher beschrieben. In Fig. 4 ist für einen Lastkreis 4 gezeigt, wie dieser abwechselnd ein- und ausgeschaltet wird. "1" steht dabei für eingeschaltet und "0" für ausgeschaltet. Für die Zeitdauer tₒₙ ist der Lastkreis eingeschaltet, für die Zeitdauer t_{off} ist der Lastkreis ausgeschaltet. Die Zykluszeit t_{z} entspricht dabei der Summe aus Einschaltzeit und Ausschaltzeit, d. h. t_{z} = tₒₙ + t_{off}. Die relative Einschaltdauer D ist das Verhältnis der Einschaltzeit tₒₙ zu der Zykluszeit t_{z}, wie in Fig. 5 dargestellt. Die Zykluszeit bzw. Zyklusdauer t_{z} ist damit die Zeitspanne zwischen dem Einschalten des Lastkreises 6 und dem nachfolgenden nächsten Einschalten des Lastkreises 6. Das Ein- und Ausschalten des Lastkreises ergibt sich aus den Signalen des zugehörigen Raumthermostaten 34. Meldet im Falle eines Heizungssystems der Raumthermostat 34, dass eine eingestellte Soll-Temperatur unterschritten wird, schaltet die Steuereinrichtung 10 den für den Raum zugehörigen Lastkreis 6 durch Öffnen des zugehörigen Regulierventils 24 ein. Dann erfolgt die oben beschriebene Volumenstromregelung für den jeweiligen Lastkreis 6. Meldet der Raumthermostat 34, dass der eingestellte Temperatur-Sollwert erreicht wird, schaltet die Steuereinrichtung 10 den zu diesem Raum zugehörigen Lastkreis 6 durch vollständiges Schließen des Regulierventils 24 ab.

Die Vorlauftemperatur Tₘᵢₓ und deren Sollwert ist für alle Lastkreise 6 gleich und wird von der Steuereinrichtung 10 in Abhängigkeit desjenigen Lastkreises 6 eingestellt, welcher die längste relative Einschaltdauer D, d. h. den relativ größten Lastzyklus aufweist. Dies ist der Lastkreis 6 mit dem größten Wärme- bzw. Kühlbedarf, sodass es zweckmäßig ist, die Vorlauftemperatur Tₘᵢₓ für diesen Lastkreis 6 ausreichend einzustellen. Die übrigen Lastkreise 6, welche geringere relative Einschaltdauern D aufweisen, weisen entsprechend einen geringeren Energiebedarf auf, sodass die eingestellte Vorlauftemperatur Tₘᵢₓ für diese Lastkreise ebenfalls ausreichend ist. Die Einstellung der Vorlauftemperatur Tₘᵢₓ erfolgt in der Weise, dass die relative Einschaltdauer D mit einem Grenzwert bzw. einer Soll-Einschaltdauer D_{ref} verglichen wird. Übersteigt die relative Einschaltdauer D die Soll-Einschaltdauer D_{ref} wird im Falle einer Heizung die Vorlauftemperatur Tₘᵢₓ bzw. zunächst deren Sollwert erhöht und im Fall eines Kühlsystems die Vorlauftemperatur Tₘᵢₓ bzw. deren Sollwert reduziert. Umgekehrt wird für den Fall, dass die relative Einschaltdauer D die Soll-Einschaltdauer D_{ref} unterschreitet, die Vorlauftemperatur Tₘᵢₓ bzw. deren Sollwert im Falle einer Heizung verringert und im Fall eines Kühlsystems erhöht. Dies erfolgt vorzugsweise proportional zu der Abweichung der Einschaltdauer D von der Soll-Einschaltdauer D_{ref}. Alternativ kann auch eine Änderung in festen Schritten erfolgen. Die Soll-Einschaltdauer D_{ref} ist als voreingestellter Wert in der Steuereinrichtung 10 gespeichert.

In Fig. 5 ist gezeigt, wie die einzelnen Regelverfahren bzw. Regelkreise zusammenwirken. Alle die vorangehend beschriebenen Regelkreise bzw. Regelverfahren werden bevorzugt kontinuierlich und gleichzeitig ausgeführt. Die ersten Regelkreise R₁, welche in Fig. 5 gezeigt sind, betreffen die Volumenstromregelung für die einzelnen Lastkreise 6. Dabei erfolgt eine Regelung für jeden Lastkreis 6 unabhängig, d. h. für jeden Lastkreis 6 wird die Differenztemperatur ΔTₙ (ΔTₙ = Tₘᵢₓ - T_{ret,n}, wobei T_{ret,n} die Austrittstemperatur des jeweiligen Lastkreises ist, welche von dem zugehörigen Temperatursensor 28 erfasst wird) mit einem Temperaturdifferenz-Sollwert ΔT_{ref} verglichen. Der Zähler n in Fig. 5 benennt den jeweiligen Lastkreis 6. Auch der Temperaturdifferenz-Sollwert ΔT kann für einzelne Lastkreise 6 unterschiedlich definiert und in der Steuereinrichtung 10 hinterlegt sein. Alternativ ist es auch möglich, für alle Lastkreise denselben Temperaturdifferenzwert ΔT_{ref} zu verwenden. Für die Regelung wird jedoch stets die tatsächliche Austrittstemperatur T_{ret,n} des jeweiligen Lastkreises zugrundegelegt, d. h. für den ersten Lastkreis 6 die Austrittstemperatur Tᵣₑₜ₁, für den zweiten Lastkreis die Austrittstemperatur Tᵣₑₜ₂ usw. In Abhängigkeit des Vergleiches der Differenztemperatur ΔTₙ mit dem Temperaturdifferenz-Sollwert ΔT_{ref} wird der Öffnungsgrad V_{pos,n} für das zugehörige Regulierventil 24 von der Steuereinrichtung 10 vorgegeben.

Ein zweiter Regelkreis R₂, welcher in Fig. 5 dargestellt ist, betrifft die vorangehend beschriebene Einstellung der Vorlauftemperatur Tₘᵢₓ durch Steuerung des Mischventiles 18. Dazu wird eine Stellgröße V_{pos,mix}, welche den Öffnungsgrad des Mischventiles 18 entspricht, von der Steuereinrichtung 10 vorgegeben, indem in oben beschriebener Weise die relative Einschaltdauer D mit der Soll-Einschaltdauer D_{ref} verglichen wird.

Ein dritter Regelkreis R₃ und ein vierter Regelkreis R₄, welche in Fig. 5 gezeigt sind und in der Steuereinrichtung 10 implementiert sind, betreffen die Differenzdruckregelung in dem Umwälzpumpenaggregat 8. So wird der Differenzdruck Hₚᵤ zwischen Ein- und Ausgang des Umwälzpumpenaggregates 8, d. h. zwischen Ein- und Ausgang der Lastkreise 6 auf einen Druckdifferenz-Sollwert H_{ref} geregelt, was in dem Regelkreis R₄ erfolgt. In dem Regelkreis R3 wird ferner der Druckdifferenz-Sollwert H_{ref} seinerseits geregelt bzw. eingestellt, was in der oben genannten Weise in Abhängigkeit des Öffnungsgrades V_{pos,n} des Regulierventils 24 geschieht. Dazu wird das Regulierventil 24 mit dem größten Öffnungsgrad Vₚₒₛ betrachtet und mit einem Soll-Öffnungsgrad V_{pos,ref} verglichen. Wird der Soll- Öffnungsgrad V_{pos,ref} unterschritten, wird proportional der Druckdifferenz-Sollwert H_{ref} erhöht. Wird der Soll-Öffnungsgrad V_{pos,ref} überschritten, wird entsprechend der Druckdifferenz-Sollwert H_{ref} verringert. Wie in Fig. 5 ebenfalls dargestellt, weist das Umwälzpumpenaggregat 8 eine Erfassungseinrichtung 38 auf, welche aus der Drehzahl Sₚᵤ und der elektrischen Leistung Pₚᵤ die tatsächliche Druckdifferenz Hₚᵤ schätzt bzw. ermittelt.

Die vier gezeigten Regelkreise R₁, R₂, R₃, R₄ sind unterschiedlich schnell bzw. unterschiedlich träge, sodass sie bevorzugt nicht miteinander wechselwirken, d. h. sich gegenseitig nicht beeinflussen. Der schnellste Regelkreis ist der Regelkreis R₄, welcher die Druckdifferenz Hₚᵤ über dem Umwälzpumpenaggregat 8 auf den Druckdifferenz-Sollwert H_{ref} regelt. Der nächstlangsamere Regelkreis ist der Regelkreis R₁, welcher den Volumenstrom durch die einzelnen Lastkreise 6 regelt. Noch langsamer ist der Regelkreis R₃, welcher den Druckdifferenz-Sollwert H_{ref} regelt. Dieser Regelkreis ist so langsam, dass diese Regelung den Regelkreis R₁ bevorzugt nicht beeinflusst. In Fig. 5 nicht dargestellt sind zwei weitere Regelkreise, nämlich der Regelkreis zur Regelung der Raumtemperatur durch Ein- und Ausschalten der Lastkreise 6 sowie der Regelkreis, welcher die Vorlauftemperatur auf dem gewählten Vorlauftemperatur-Sollwert regelt. Diese beiden Regelkreise sind vorzugsweise noch langsamer ausgebildet, als die vorangehend beschriebenen Regelkreise, wobei derjenige Regelkreis, welcher den Vorlauftemperatur-Sollwert einstellt, vorzugsweise der langsamste Regelkreis ist.

Neben den vorangehend beschriebenen Regelungsverfahren kann die Steuereinrichtung 10 weitere Funktionen übernehmen. Da die Steuereinrichtung 10 mit den Raumthermostaten 34 kommuniziert und in Abhängigkeit der Signale von den Raumthermostaten 34 die Lastkreise 6 durch Öffnen der Regulierventile 24 einschaltet, ist es möglich, in der Steuereinrichtung 10 gewisse Prioritäten für einzelne Lastkreise 6 zu hinterlegen. So ist es beispielsweise bei einem Heizungssystem bei großer Kälte möglich, nicht alle Lastkreise 6 gleichzeitig zu aktivieren, falls die von einem Heizkessel zur Verfügung gestellte Wärmemenge dazu nicht ausreichen würde. Zum Aufheizen können zunächst priorisierte Heizkreise, wie beispielsweise für Wohnräume oder Bad eingeschaltet werden und weniger wichtige Lastkreise 6, beispielsweise zum Beheizen von Schlafräumen zunächst ausgeschaltet bleiben. Dabei kann die Steuereinrichtung 10 selbsttätig erfassen, dass die zur Verfügung stehende Heizleistung nicht ausreicht, nämlich dann, wenn alle Regulierventile 34 geöffnet sind, d. h. den maximalen Öffnungsgrad aufweisen und dennoch die Temperaturdifferenz ΔT zwischen Eingang 30 und Ausgang 22 zu groß wird. Umgekehrt funktioniert dies in entsprechender Weise auch bei einem Kühlsystem. Die Priorität der Lastkreise 6 kann voreingestellt und in der Steuereinrichtung 10 hinterlegt sein. Darüber hinaus kann die Steuereinrichtung 10 so ausgebildet sein, dass sie zum Aufheizen von Räumen die Vorlauftemperatur Tₘᵢₓ für eine gewisse Zeit über den üblicherweise gewünschten Sollwert, welcher sich aus der vorangehend beschriebenen Regelung ergibt, erhöht, um ein schnelleres Aufheizen der Räume zu ermöglichen.

Schließlich kann die Steuereinrichtung 10 auch eine Diagnosefunktion bzw. ein Diagnosemodul beinhalten, welches die korrekte Funktion der Regulierventile 24 sowie der Lastkreise 6 diagnostiziert. So kann die Steuereinrichtung 10 in einem Diagnosemodus die Regulierventile 24 der Lastkreise 6 einzeln öffnen bzw. den Öffnungsgrad der Regulierventile 24 vergrößern oder verkleinern, idealerweise auf das Maximum vergrößern. Dabei wird jeweils nur ein Regulierventil 24 ausgehend von einem Ausgangsöffnungsgrad weiter geöffnet oder geschlossen, während die anderen Regulierventile 24 unverändert oder geschlossen bleiben. Bevorzugt wird das Regulierventil 24 des zu überprüfenden Lastkreises 6 weiter geöffnet. Anschließend werden der Durchfluss durch das Umwälzpumpenaggregat 8 sowie der Differenzdruck über dem Umwälzpumpenaggregat 8 erfasst und daraus der hydraulische Widerstand des Systems bzw. eine Änderung des hydraulischen Widerstands bestimmt. Die Steuereinrichtung 10 empfängt auch Informationen bzw. Signale von dem Umwälzpumpenaggregat 8, welche den Durchfluss und den Differenzdruck angegeben. Die Steuereinrichtung 10 vergleicht den ermittelten hydraulischen Widerstand mit einem für das System vorgegebenen und in der Steuereinrichtung 10 gespeicherten maximalen hydraulischen Widerstand. Übersteigt der erfasste hydraulische Widerstand der vorgegebenen maximalen hydraulischen Widerstand, spricht dies für einen Fehler und die Steuereinrichtung 10 signalisiert diesen Fehler, sodass das System anschließend überprüft werden kann. Wenn der hydraulische Widerstand vor und nach dem Öffnen des Regulierventils 24 miteinander verglichen werden, kann darüber hinaus die korrekte Funktion des Regulierventils 24 ermittelt werden. Ferner kann der hydraulische Widerstand in der Steuereinrichtung 10 auch mit einem Minimalwert verglichen werden. Wird ein gespeicherter Minimalwert unterschritten, kann daraus ebenfalls auf eine Fehlfunktion geschlossen werden.

Die beschriebene Diagnosefunktion kann darüber hinaus so verwirklicht sein, dass der Druckverlust und damit der hydraulische Widerstand nur der einzelnen Lastkreise 6 berücksichtigt bzw. von der Steuereinrichtung 10 ermittelt wird. Auch dies kann durch Kenntnis der Charakteristik der im Strömungsweg liegenden Ventile, insbesondere des Rückschlagventils 20 und der Regulierventile 24 unter Berücksichtigung des bekannten Öffnungsgrades der Ventile 24 geschehen. Wenn die Druckverluste der Ventile bei dem gegebenen Betriebszustand bekannt sind, kann so der Anteil des gesamten Druckverlustes, welcher zwischen Ein- und Ausgang der Umwälzpumpe 8 gegeben ist, bestimmt werden, welcher durch den jeweiligen Lastkreis 6 selber verursacht wird. Entsprechend können auch die zulässigen Grenzwerte für den Druckverlust bzw. den hydraulischen Widerstand auf den Lastkreis 6 selber abgestellt werden. D. h. es wird bei dem Vergleich mit den zulässigen Grenzen lediglich der hydraulische Widerstand des Lastkreises berücksichtigt und die Grenzwerte stellen Grenzwerte für den hydraulischen Widerstand des Lastkreises dar.

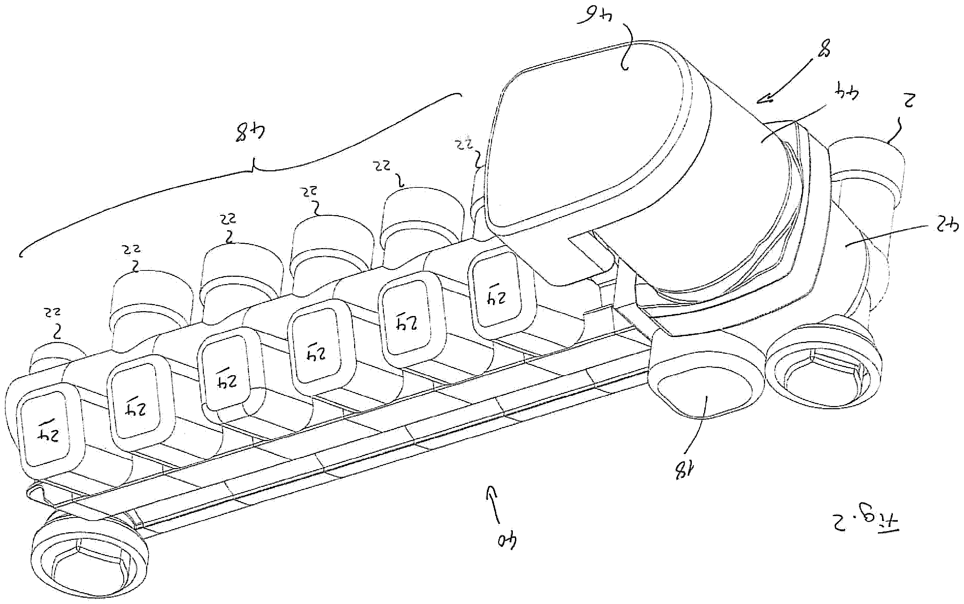

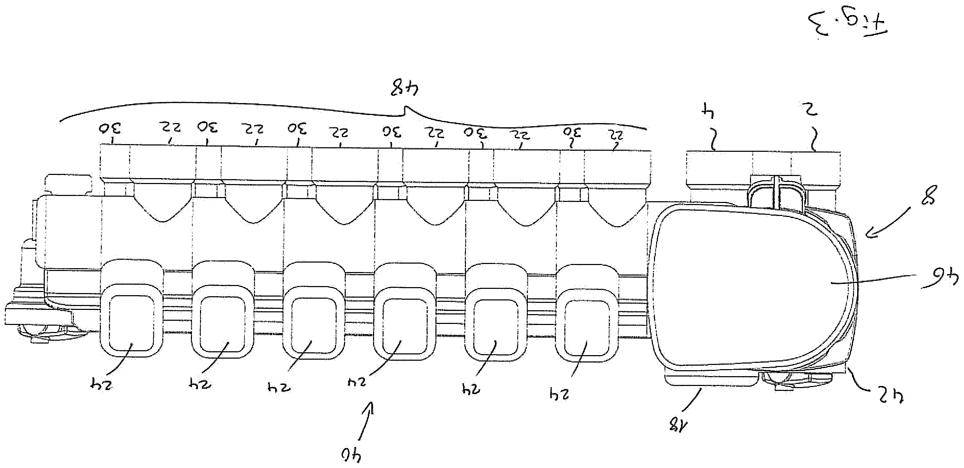

Die wesentlichen Komponenten des in Fig. 1 gezeigten Heizungssystems sind vorzugsweise in eine Verteiler-Einrichtung in Form eines Heizungsverteilers integriert, wie er in Figuren 2 und 3 gezeigt ist. Dabei sind alle wesentlichen innerhalb der gestrichelten Linie in Fig. 1 liegenden Bauteile in die Verteiler-Einrichtung in Form einer Baueinheit integriert. So weist der in Figuren 2 und 3 gezeigte Heizungsverteiler 40 als zentrale Komponente das Umwälzpumpenaggregat 8 auf. Dieses weist ein Pumpengehäuse 42 auf, in welchem ein drehbares Laufrad angeordnet ist. Das Laufrad wird von einem elektrischen Antriebsmotor angetrieben, welcher in einem Motor- bzw. Statorgehäuse 44 angeordnet ist. An dem dem Pumpengehäuse 42 abgewandten Axialende des Statorgehäuse 44 ist ein Klemmenkasten bzw. Elektronikgehäuse 46 angeordnet, in welchem die Steuereinrichtung 10 untergebracht ist. Das Pumpengehäuse 42 weist den Einlass 2 sowie den Auslass 4 in Form von Anschlüssen von externen Rohrleitungen auf. Ferner sind in dem Pumpengehäuse das Mischventil 18 angeordnet und die Mischleitung 12 mit dem Mischpunkt 16 ausgebildet. Das Pumpengehäuse 42 ist an einer Seite mit dem eigentlichen Verteiler 48 verbunden. Der Verteiler 48 weist Module 50 für die einzelnen Lastkreise, in diesem Fall sechs Lastkreise 6, auf. In den Modulen 50 sind die Regulierventile 24 sowie Anschlüsse, welche die Eingänge 30 für die Lastkreise 6 bilden, angeordnet. Ferner weist jedes Modul 50 einen Anschluss auf, welcher den Ausgang 22 für den jeweiligen Lastkreis 6 bildet. An die die Eingänge 30 und die Ausgänge 22 bildenden Anschlüsse können Rohrleitungen, welche die Lastkreise 6 bilden, beispielsweise Rohrleitungen einer Fußbodenheizung angeschlossen werden. In dem Verteiler 48 sind eine Zulauf- und eine Rücklaufleitung angeordnet, welche mit dem Pumpengehäuse 42 verbunden sind, wobei die Rücklaufleitung mit dem Rücklauf 14 in dem Pumpengehäuse und die Zulaufleitung mit der Ausgangsseite der Umwälzpumpe 8 verbunden ist. Auch die Temperatursensoren 26 und 28 sind in den Verteiler 48 bzw. das Pumpengehäuse 42 integriert. So bilden vorzugsweise lediglich die Raumthermostate 34 mit ihren Funkschnittstellen 36 externe Komponenten der Regelungstechnik, welche sich jedoch durch die Funkverbindung leicht mit der ebenfalls in dem Elektronikgehäuse 46 angeordneten Kommunikationsschnittelle 32 der Steuereinrichtung 10 verbinden lassen. Alle anderen erforderlichen elektrischen und/oder elektronischen Bauteile zur Steuerung und/oder Regelung sind in den Heizungsverteiler 40 als eine vorgefertigte Baueinheit integriert.

### Bezugszeichenliste

- 2: - Einlass
- 4: - Auslass
- 6: - Lastkreise
- 8: - Umwälzpumpenaggregat
- 10: - Steuereinrichtung
- 12: - Mischleitung
- 14: - Rücklauf
- 16: - Mischpunkt
- 17: - Abzweig
- 18: - Mischventil
- 20: - Rückschlagventil
- 22: - Ausgänge
- 24: - Regulierventil
- 26: - Vorlauftemperatursensor
- 28: - Temperatursensoren
- 30: - Eingänge
- 32: - Kommunikationsschnittstelle
- 34: - Raumthermostat
- 36: - Funkschnittstelle
- 38: - Erfassungseinrichtung
- 40: - Heizungsverteiler
- 42: - Pumpengehäuse
- 44: - Statorgehäuse
- 46: - Elektronikgehäuse
- 48: - Verteiler

- R₁, R₂, R₃, R₄: - Regelungskreise
- Tₘᵢₓ: - Vorlauftemperatur
- T_{ret,n}: Austrittstemperatur
- ΔT: - Temperaturdifferenz
- ΔT_{ref}: - Temperaturdifferenz-Sollwert
- Hₚᵤ: - Differenzdruck
- H_{ref}: - Druckdifferenz-Sollwert
- V_{pos,ref}: - Soll-Öffnungsgrad
- V_{pos,mix}-: - Öffnungsgrad des Mischventils 18
- V_{pos,n}: - Öffnungsgrad des Regulierventils 24
- D: - relative Einschaltdauer
- D_{ref}: - Soll-Einschaltdauer
- t_{z}: - Zykluszeit
- tₒₙ: - Einschaltzeit
- t_{off}: - Ausschaltzeit
- Sₚᵤ: - Drehzahl
- Pₚᵤ: - Leistung

## Patentansprüche

1. Regelungsverfahren für ein Heizungs- und/oder Kühlsystem mit zumindest einem Lastkreis (6), durch welchen ein Fluid als Wärmeträger strömt, einem in dem Lastkreis (6) angeordneten Regulierventil (24) zum Einstellen eines Volumenstromes durch den Lastkreis (6) sowie einer Umwälzpumpe (8) zum Fördern des Fluids durch den Lastkreis (6),
wobei eine Drehzahl der Umwälzpumpe (8) derart geregelt wird, dass ein Differenzdruck (Hₚᵤ) über der Umwälzpumpe einem vorgegebenen Druckdifferenz-Sollwert (H_{ref}) entspricht, und
der Druckdifferenz-Sollwert (H_{ref}) für den Differenzdruck (Hₚᵤ) über der Umwälzpumpe (8) in Abhängigkeit des Öffnungsgrades (V_{pos,n}) des Regulierventils (24) in dem Lastkreis (6) angepasst wird, wobei eine zentrale Steuereinrichtung (10) den Öffnungsgrad (V_{pos,n}) des Regulierventils (24) erfasst oder vorgibt und gleichzeitig den Druckdifferenz-Sollwert (H_{ref}) einstellt, indem zur Anpassung des Druckdifferenz-Sollwertes (H_{ref}) für den Differenzdruck (Hₚᵤ) über der Umwälzpumpe (8) dasjenige Regulierventil (24) zugrunde gelegt wird, welches am weitesten geöffnet ist, **dadurch gekennzeichnet, dass** der Öffnungsgrad (V_{pos,n}) dieses Regulierventils (24) mit einem Soll-Öffnungsgrad (V_{pos,ref}) verglichen wird und bei Überschreiten des Soll-Öffnungsgrades (V_{pos,ref}) der Druckdifferenz-Sollwert (H_{ref}) für den Differenzdruck (Hₚᵤ) erhöht wird sowie bei Unterschreiten des Soll-Öffnungsgrades (V_{pos,ref}) der Druckdifferenz-Sollwert (H_{ref}) für den Differenzdruck (Hₚᵤ) reduziert wird.

2. Regelungsverfahren nach Anspruch 1, **dadurch gekennzeichnet, dass** eine Eingangstemperatur (Tₘᵢₓ) des Fluids an einem Eingang (30) des zumindest einen Lastkreises (6) und eine Austrittstemperatur (T_{ref,n}) des Fluids an einem Ausgang (22) des zumindest einen Lastkreises (6) erfasst werden, eine Temperaturdifferenz (ΔT) zwischen der Eingangstemperatur (Tₘᵢₓ) und der Ausgangstemperatur (T_{ref,n}) bestimmt werden, und ein Volumenstrom des Fluids durch diesen Lastkreis (6) in Abhängigkeit dieser Temperaturdifferenz (ΔT) über das Regulierventil (24) in diesem Lastkreis (6) eingestellt wird.

3. Regelungsverfahren nach Anspruch 2, **dadurch gekennzeichnet, dass** zur Regelung des Volumenstroms in dem zumindest einen Lastkreis (6) die für den Lastkreis (6) ermittelte Temperaturdifferenz (ΔT) mit einem Temperaturdifferenz-Sollwert (ΔT_{ref}) verglichen wird und bei einer Abweichung der Temperaturdifferenz (ΔT) von dem Temperaturdifferenz-Sollwert (ΔT_{ref}), der Volumenstrom erhöht oder verringert wird.

4. Regelungsverfahren nach einem der vorangehenden Ansprüche, **dadurch gekennzeichnet, dass** in einem von dem Lastkreis (6) zu temperierenden Raum eine Raumtemperatur erfasst wird und, wenn die Raumtemperatur einen Temperatur-Sollwert erreicht, der Lastkreis (6) durch Unterbrechung des Volumenstromes ausgeschaltet wird.

5. Regelungsverfahren nach einem der vorangehenden Ansprüche, **dadurch gekennzeichnet, dass** eine Vorlauftemperatur (Tₘᵢₓ) des dem zumindest einen Lastkreis zugeführten Fluids in Abhängigkeit der relativen Einschaltdauer (D) des zumindest einen Lastkreises (6) eingestellt wird, wobei die relative Einschaltdauer (D) die Einschaltzeit (tₒₙ) bezogen auf die Zykluszeit (t_{z}) zwischen einem Einschalten des Lastkreises (6) und einem nachfolgenden erneuten Einschalten ist.

6. Regelungsverfahren nach Anspruch 5, **dadurch gekennzeichnet, dass** mehrere Lastkreise (6) vorhanden sind und zur Einstellung der Vorlauftemperatur (Tₘᵢₓ) eines allen Lastkreisen (6) gemeinsam zugeführten Fluids die relative Einschaltdauer (D) desjenigen Lastkreises (6) berücksichtigt wird, welcher die längsten Einschaltdauern (D) aufweist.

7. Verteiler-Einrichtung für ein Heizungs- und/oder Kühlsystem mit zumindest einem Lastkreis (6), wobei die Verteilereinrichtung zumindest eine in ihrer Drehzahl einstellbare Umwälzpumpe (8) zum Fördern eines Fluids durch den zumindest einen Lastkreis (6) sowie ein Regulierventil (24) zum Einstellen des Volumenstromes durch den zumindest einen Lastkreis (6) aufweist, **gekennzeichnet durch** eine mit der Umwälzpumpe (8) und einer Druckerfassungseinrichtung zum Ermitteln eines Differenzdruckes (Hₚᵤ) über der Pumpe (8) verbundene Steuereinrichtung (10), welche derart ausgestaltet ist, dass sie ein Regelungsverfahren gemäß einem der vorangehenden Ansprüche zur Einstellung der Drehzahl der Umwälzpumpe (8) zum Erreichen eines Druckdifferenz-Sollwertes (H_{ref}) und zum Anpassen dieses Druckdifferenz-Sollwertes (H_{ref}) ausführt.

8. Verteiler-Einrichtung nach Anspruch 7, **dadurch gekennzeichnet, dass** die Steuereinrichtung (10) in die Umwälzpumpe (8) integriert ist und insbesondere in einem Elektronikgehäuse (46) der Umwälzpumpe (8) angeordnet ist.

9. Verteiler-Einrichtung nach Anspruch 7 oder 8, **gekennzeichnet durch** mehrere Regulierventile (24), welche jeweils zum Einstellen eines Volumenstromes in einem von mehreren Lastkreisen (6) vorgesehen sind, wobei die Steuereinrichtung (10) zur Ansteuerung der mehreren Regulierventile (24) ausgebildet und mit den Regulierventilen (24) zu deren Ansteuerung signalverbunden ist.

10. Verteiler-Einrichtung nach Anspruch 9, **dadurch gekennzeichnet, dass** die mehreren Regulierventile (24) in einer gemeinsamen Verteilerbaugruppe (40) angeordnet sind.

11. Verteiler-Einrichtung nach Anspruch 10, **dadurch gekennzeichnet, dass** die Steuereinrichtung (10) ebenfalls in der gemeinsamen Verteilerbaugruppe (40) angeordnet ist.

12. Verteiler-Einrichtung nach einem der Ansprüche 7 bis 11, **dadurch gekennzeichnet, dass** die Druckerfassungseinrichtung in die Umwälzpumpe (8) integriert ist und ausgestaltet ist, den Differenzdruck (Hₚᵤ) über der Umwälzpumpe (8) auf Grundlage von Betriebsparametern der Umwälzpumpe (8) zu ermitteln.

## Claims

1. A regulating method for a heating and/or cooling system with at least one load circuit (6), through which a fluid as a heat transfer medium flows, with a regulating valve (24) arranged in the load circuit (6) for setting a volume flow through the load circuit (6) as well as with a circulation pump (8) for delivering the fluid through the load circuit (6),
wherein
a speed of the circulation pump (8) is regulated in a manner such that a differential pressure (Hₚᵤ) across the circulation pump corresponds to a predefined pressure difference setpoint (H_{ref}), and
the pressure difference setpoint (H_{ref}) for the differential pressure (Hₚᵤ) across the circulation pump (8) is adapted in dependence on the opening degree (V_{pos,n}) of the regulating valve (24) in the load circuit (6), wherein a central control device (10) detects or sets the opening degree (V_{pos,n}) of the regulation valve (24) and simultaneously sets the pressure difference setpoint (H_{ref}) whilst that regulating valve (24) which is opened the furthest which forms the basis for adapting the pressure difference setpoint (H_{ref}) for the differential pressure (Hₚᵤ) across the circulation pump (8), **characterised in that** the opening degree (V_{pos,n}) of this regulating valve (24) is compared to a desired opening degree (V_{pos,ref}), and the pressure difference setpoint (H_{ref}) for the differential pressure (Hₚᵤ) is increased on exceeding the desired opening degree (V_{pos,ref}), and the pressure difference setpoint (H_{ref}) for the differential pressure (Hₚᵤ) is reduced on falling short of the desired opening degree (V_{pos,ref}).

2. A regulating method according to claim 1, **characterised in that** an entry temperature (Tₘᵢₓ) of the fluid at an entry (30) of the at least one load circuit (6) and an exit temperature (T_{ref,n}) of the fluid at an exit (22) of the at least one load circuit (6) are detected, a temperature difference (ΔT) between the entry temperature (Tₘᵢₓ) and the exit temperature (T_{ref,n}) is determined, and a volume flow of the fluid through this load circuit (6) is set in dependence on this temperature difference (ΔT) across the regulating valve (24) in this load circuit (6).

3. A regulating method according to claim 2, **characterised in that** for the regulation of the volume flow in the at least one load circuit (6), the temperature difference (ΔT) determined for the load circuit (6) is compared to a temperature difference setpoint (ΔT_{ref}), and the volume flow is increased or reduced given a deviation of the temperature difference (ΔT) from the temperature difference setpoint (ΔT_{ref}).

4. A regulating method according to one of the preceding claims, **characterised in that** a room temperature in a room to be thermally regulated by the load circuit (6) is detected, and the load circuit (6) is switched off by way of interrupting the volume flow, if the room temperature reaches a temperature setpoint.

5. A regulating method according to one of the preceding claims, **characterised in that** a feed temperature (Tₘᵢₓ) of the fluid fed to the at least one load circuit is set in dependence on the relative switch-on duration (D) of the at least one load circuit (6), wherein the relative switch-on duration (D) is the switch-on time (tₒₙ) in dependence on the cycle time (t_{z}) between a switching-on of the load circuit (6) and a subsequent second switching-on.

6. A regulating method according to claim 5, **characterised in that** several load circuits (6) are present and the relative switch-on duration (D) of that load circuit (6) having the longest switch-on durations (D) is taken into account for setting the feed temperature (Tₘᵢₓ) of a fluid commonly fed to all load circuits (6).

7. A manifold device for a heating and/or cooling system with at least one load circuit (6), wherein the manifold device comprises at least one circulation pump (8) which can be set in its speed and is for delivering a fluid through the at least one load circuit (6), as well as a regulating valve (24) for setting the volume flow through the at least one load circuit (6), **characterised by** a control device (10) which is connected to the circulation pump (8) and to a pressure detection device for determining a differential pressure (Hₚᵤ) across the pump (8) and which is designed in a manner such that it carries out a regulating method according to one of the preceding claims, for setting the speed of the circulation pump (8) for achieving a pressure difference setpoint (H_{ref}) and for adapting this pressure difference setpoint (H_{ref}).

8. A manifold device according to claim 7, **characterised in that** the control device (10) is integrated into the circulation pump (8) and in particular is arranged in an electronics housing (46) of the circulation pump (8).

9. A manifold device according to claim 7 or 8, **characterised by** several regulating valves (24) which are provided in each case for setting a volume flow in one of several load circuits (6), wherein the control device (10) is designed for activating the several regulating valves (24) and is signal-connected to the regulating valves (24) for their activation.

10. A manifold device according to claim 9, **characterised in that** the several regulating valves (24) are arranged in a common manifold subassembly (40).

11. A manifold device according to claim 10, **characterised in that** the control device (10) is likewise arranged in the common manifold subassembly (40).

12. A manifold device according to one of the claims 7 to 11, **characterised in that** the pressure detection device is integrated into the circulation pump (8) and is designed to determine the differential pressure (Hₚᵤ) across the circulation pump (8) on the basis of operating parameters of the circulation pump (8).

## Revendications

1. Procédé de régulation pour un système de chauffage et/ou de refroidissement comprenant au moins un circuit de charge (6) à travers lequel circule un fluide en tant qu'agent caloporteur, une soupape de régulation (24) disposée dans le circuit de charge (6) pour le réglage d'un débit volumique à travers le circuit de charge (6), ainsi qu'une pompe de circulation (8) destinée à acheminer le fluide à travers le circuit de charge (6), dans lequel un régime de la pompe de circulation (8) est régulé de façon telle qu'une pression différentielle (Hₚᵤ) au-dessus de la pompe de circulation correspond à une consigne de pression différentielle (H_{ref}) prédéterminée, et la consigne de pression différentielle (H_{ref}) pour la pression différentielle (Hₚᵤ) au-dessus de la pompe de circulation (8) est adaptée en fonction du degré d'ouverture (V_{pos.n}) de la soupape de régulation (24) dans le circuit de charge (6), un dispositif central de commande (10) détectant ou prédéterminant le degré d'ouverture (V_{pos.n}) de la soupape de régulation (24) et réglant simultanément la consigne de pression différentielle (H_{ref}) en prenant comme base, pour l'adaptation de la consigne (H_{ref}) de pression différentielle (Hₚᵤ) au-dessus de la pompe de circulation (8), la soupape de régulation (24) qui est la plus ouverte,
**caractérisé en ce que** le degré d'ouverture (V_{pos.n}) de cette soupape de régulation (24) est comparé à un degré d'ouverture de consigne (V_{pos.ref}) et **en ce que**, en cas de dépassement du degré d'ouverture de consigne (V_{pos.ref}), on augmente la consigne (H_{ref}) de pression différentielle (Hₚᵤ), de même que si le degré d'ouverture de consigne (V_{pos.ref}) n'est pas atteint, on diminue la consigne (H_{ref}) de pression différentielle (Hₚᵤ).

2. Procédé de régulation selon la revendication 1, **caractérisé en ce qu'**une température d'entrée (Tₘᵢₓ) du fluide à une entrée (30) du circuit de charge (6), au moins au nombre de un, et une température de sortie (T_{ref.n}) du fluide à une sortie (22) du circuit de charge (6), au moins au nombre de un, sont détectées, une différence de température (ΔT) entre la température d'entrée (Tₘᵢₓ) et la température de sortie (T_{ref.n}) est déterminée et un débit volumique du fluide à travers ce circuit de charge (6) est réglé en fonction de cette différence de température (ΔT) via la soupape de régulation (24) dans ce circuit de charge (6).

3. Procédé de régulation selon la revendication 2, **caractérisé en ce que**, pour la régulation du débit volumique dans le circuit de charge (6), au moins au nombre de un, la différence de température (ΔT) déterminée pour le circuit de charge (6) est comparée à une consigne de différence de température (ΔT_{ref}) et, en cas d'écart entre la différence de température (ΔT) et la consigne de différence de température (ΔT_{ref}), on augmente ou on diminue le débit volumique.

4. Procédé de régulation selon l'une des revendications précédentes, **caractérisé en ce qu'**une température ambiante est détectée dans un espace devant être tempéré par le circuit de charge (6) et **en ce que**, lorsque la température ambiante atteint une consigne de température, le circuit de charge (6) est mis hors circuit par interruption du débit volumique.

5. Procédé de régulation selon l'une des revendications précédentes, **caractérisé en ce qu'**une température d'entrée (Tₘᵢₓ) du fluide acheminé vers au moins un circuit de charge est réglée en fonction de la durée relative de mise en circuit (D) du circuit de charge (6), au moins au nombre de un, la durée relative de mise en circuit (D) étant le temps de mise en circuit (tₒₙ) rapporté au temps de cycle (t_{z}) entre une mise en circuit du circuit de charge (6) et la nouvelle mise en circuit suivante.

6. Procédé de régulation selon la revendication 5, **caractérisé en ce que** sont prévus plusieurs circuits de charge (6) et **en ce que**, pour le réglage de la température d'entrée (Tₘᵢₓ) d'un fluide acheminé conjointement à tous les circuits de charge (6), est prise en compte la durée relative de mise en circuit (D) du circuit de charge (6) respectif qui présente les plus longues durées de mise en circuit (D).

7. Distributeur pour système de chauffage et/ou de refroidissement, comprenant au moins un circuit de charge (6), le distributeur comportant au moins une pompe de circulation (8) à régime réglable pour acheminer un fluide à travers le circuit de charge (6), au moins au nombre de un, ainsi qu'une soupape de régulation (24) pour le réglage du débit volumique à travers le circuit de charge (6), au moins au nombre de un, **caractérisé par** un dispositif central de commande (10) relié à la pompe de circulation (8) et à un dispositif de détection de pression pour déterminer une pression différentielle (Hₚᵤ) au-dessus de la pompe (8), lequel est conçu de façon à exécuter un procédé de régulation selon l'une des revendications précédentes pour le réglage du régime de la pompe de circulation (8) afin d'atteindre une consigne de pression différentielle (H_{ref}) et d'adapter cette consigne de pression différentielle (H_{ref}).

8. Distributeur selon la revendication 7, **caractérisé en ce que** le dispositif de commande (10) est intégré dans la pompe de circulation (8) et, en particulier, est disposé dans un boîtier électronique (46) de la pompe de circulation (8).

9. Distributeur selon la revendication 7 ou 8, **caractérisé par** plusieurs soupapes de régulation (24) qui sont prévues respectivement pour le réglage d'un débit volumique dans l'un de plusieurs circuits de charge (6), le dispositif de commande (10) étant conçu pour la commande desdites plusieurs soupapes de régulation (24) et étant relié par signaux aux soupapes de régulation (24) pour la commande de celles-ci.

10. Distributeur selon la revendication 9, **caractérisé en ce que** lesdites plusieurs soupapes de régulation (24) sont disposées dans un module distributeur (40) commun.

11. Distributeur selon la revendication 10, **caractérisé en ce que** le dispositif de commande (10) est également disposé dans le module distributeur (40) commun.

12. Distributeur selon l'une des revendications 7 à 11, **caractérisé en ce que** le dispositif de détection de pression est intégré dans la pompe de circulation (8) et est conçu pour déterminer la pression différentielle (Hₚᵤ) au-dessus de la pompe de circulation (8) sur la base de paramètres de fonctionnement de la pompe de circulation (8).
